# EUROPEAN PATENT SPECIFICATION

(11) **EP 3 605 495 B1**
(45) Date of publication and mention of the grant of the patent: **01.10.2025**
(21) Application number: 18775846.1
(22) Date of filing: 23.03.2018
(51) Int. Cl.: G08G 1/14, G08G 1/017, G08G 1/042, E01F 13/08, G08G 1/04, G06Q 10/02, G07B 15/04

(54) **PARKING MANAGEMENT METHOD, SERVER, PARKING SPOT LOCK**
PARKVERWALTUNGSVERFAHREN, SERVER, PARKPLATZSPERRE
PROCÉDÉ DE GESTION DE STATIONNEMENT, SERVEUR, VERROUILLAGE D'EMPLACEMENT DE STATIONNEMENT

(30) Priority: 28.03.2017 CN 201710194791
(43) Date of publication of application: 05.02.2020
(73) Proprietor: ZTE Corporation, Shenzhen, Guangdong 518057 (CN)
(72) Inventor: LI, Haibin, Shenzhen, Guangdong 518057 (CN); WU, Lin, Shenzhen, Guangdong 518057 (CN); CHEN, Shibo, Shenzhen, Guangdong 518057 (CN); LV, Chunsheng, Shenzhen, Guangdong 518057 (CN)
(74) Representative: Ricker, Mathias
(86) International application number: PCT/CN2018/080339
(87) International publication number: WO 2018/177225

(56) References cited:
- CN-A- 102 750 835
- CN-A- 102 831 785
- CN-A- 103 714 713
- CN-A- 105 023 463
- CN-A- 105 303 878
- CN-A- 105 701 869
- JP-A- 2003 303 296

## Description

### TECHNICAL FIELD

The present invention relates to the field of parking management and, in particular, to a parking management method, and a parking spot lock.

### BACKGROUND

With the continuous economic development, traffic congestion and insufficient parking spots have become one of the important factors restricting urban development. Curb parking lots are provided to effectively solve the problem of an insufficient supply of urban parking spots and reducing the traffic congestion due to searches for parking spots.

A geomagnetism-based parking spot detection technology enables a vehicle owner to quickly find an empty parking spot through a parking spot management system, reducing parking spot search time and improving a parking spot turnover rate. However, in a central district or a busy commercial area of the city, even if the vehicle owner has found an empty parking spot, this empty parking spot may be occupied before the vehicle owner arrives at the empty parking spot. Therefore, a parking spot reservation becomes one important requirement on a curb parking system.

Meanwhile, with a surge in the number of new-energy vehicles, charging piles will be built on the roadside of the curb parking lot. The owners of the new-energy vehicles need to acquire parking spots for charging their vehicles. Therefore, the parking spot reservation has become one urgent requirement on the curb parking system.

Although intelligent remote control parking spot locks can implement the parking spot reservation, the intelligent remote control parking spot locks are mainly applied to an off-street parking lot, and the owners need to remotely control the parking spot lock to be unlocked in the proximity of the parking spot lock. The intelligent remote control parking spot lock cannot solve the problem of the parking spot reservation in the curb parking lot.

The CN 105701869 A describes a parking management method and a device thereof, with which an automatic detection is achieved and a parking spot lock stopping arm is controlled to lift up and down without manual operation. The patent application CN 102 750 835 A describes a parking management method comprising the steps of the preamble of claim 1.

### SUMMARY

In view of this, the present invention provides a parking management method, and a parking spot lock, so as to implement a parking spot reservation in a curb parking lot, and reduce parking spot search time and traffic congestion.

The problem of the present invention is solved by a parking management method according to the independent claim 1 as well as by a system according to the independent claim 11.

The dependent claims refer to further advantageous developments of the present invention.

### BRIEF DESCRIPTION OF DRAWINGS

FIG. 1 is a flowchart illustrating a basic process of a parking management method on a terminal side according to an embodiment 1 useful for the understanding of the present invention;
FIG. 2 is a flowchart illustrating a detailed process of a parking management method on a terminal side according to an embodiment 2 useful for the understanding of the present invention;
FIG. 3 is a flowchart illustrating a basic process of a parking management method on a server side according to an embodiment 3 useful for the understanding of the present invention;
FIG. 4 is a flowchart illustrating a detailed process of a parking management method on a server side according to an embodiment 4 of the present invention;
FIG. 5 is a flowchart illustrating a basic process of a parking management method on a parking spot lock side according to an embodiment 5 useful for the understanding of the present invention;
FIG. 6 is a flowchart illustrating a detailed process of the parking management method on a parking spot lock side according to the embodiment 6 of the present invention;
FIG. 7 is a flowchart illustrating a detailed process of a parking management method according to an embodiment 7 useful for the understanding of the present invention;
FIG. 8 is a structural diagram of a terminal according to an embodiment 8 useful for the understanding of the present invention;
FIG. 9 is a structural diagram of a server according to an embodiment 9 useful for the understanding of the present invention;
FIG. 10 is a structural diagram of a parking spot lock according to an embodiment 10 of the present invention;
FIG. 11 is a cross-sectional view of a parking spot lock according to an embodiment 10 of the present invention;
FIG. 12 is a structural diagram of a parking management system according to an embodiment 11 useful for the understanding of the present invention; and
FIG. 13 is a structural diagram illustrating hardware of a server according to an embodiment useful for the understanding of the present invention.

### DETAILED DESCRIPTION

In the following description the embodiments 3 and 4 are according to the invention, while the remaining embodiments, in as much as they do not disclose features of the dependent claims, are not covered by the claims and are presented for illustration purposes only.

Method embodiment 1 useful for the understanding of the present invention

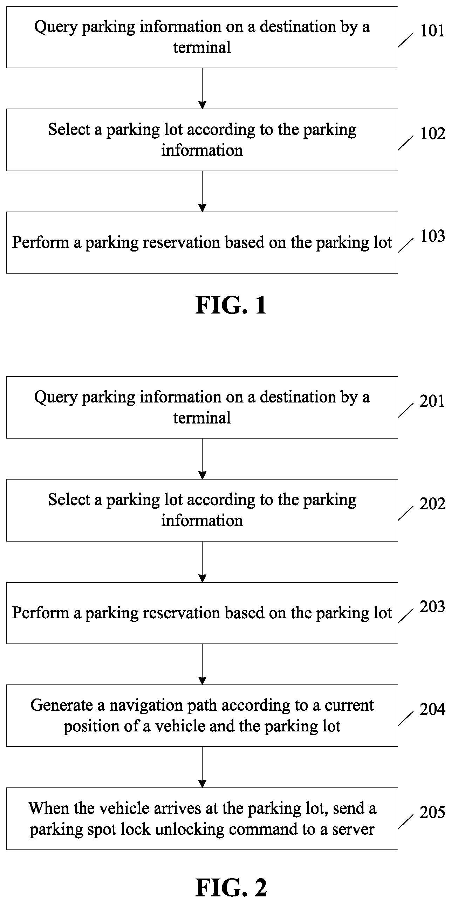

A basic process of a parking management method is provided in an embodiment 1 useful for the understanding of the present invention. As shown in FIG. 1, the basic process includes steps described below.

In step 101, a terminal queries parking information on a destination.

Specifically, the terminal sends a parking information query request message carrying the destination of a vehicle to a server to request a query of information on parking lots at the destination and receives the parking information sent by the server.

The parking information includes the number of parking lots at the destination, the number of parking spots in each parking lot, and traffic information of each parking lot such as presence or absence of traffic congestion near the parking lot. A suggested parking lot is provided for the terminal according to the information on the parking lots. The parking lots are marked with colors, for example, a green color indicates a preferred parking lot which has light traffic nearby and a large number of reservable parking spots, and a red color indicates an unrecommended parking lot which has heavy traffic nearby and a small number of reservable parking spots.

In step 102, a parking lot is selected according to the parking information.

Specifically, the terminal selects one parking lot according to the parking information provided by the server.

In step 103, a parking reservation is performed based on the parking lot.

Specifically, the terminal sends a parking reservation request message to the server to request the server to reserve a parking spot based on the parking lot and receives a parking reservation success message sent by the server. The parking reservation success message is used for notifying the terminal that the parking spot is successfully reserved.

The parking reservation request message includes information related to the parking lot selected by the terminal, such as a name of the parking lot.

Here, the parking reservation success message includes information on the parking lot and the parking spot reserved for the terminal, such as a number of the reserved parking spot.

Method embodiment 2 useful for the understanding of the present invention

A detailed process of a parking management method is provided in an embodiment 2 useful for the understanding of the present invention. As shown in FIG. 2, the detailed process includes steps described below.

In step 201, a terminal queries parking information on a destination.

Specifically, the terminal sends a parking information query request message carrying the destination of a vehicle to a server to request a query of information on parking lots at the destination and receives the parking information sent by the server.

The parking information includes the number of parking lots at the destination, the number of parking spots in each parking lot, and traffic information of each parking lot such as presence or absence of traffic congestion near the parking lot. A suggested parking lot is provided for the terminal according to the information on the parking lots. The parking lots are marked with colors, for example, a green color indicates a preferred parking lot which has light traffic nearby and a large number of reservable parking spots, and a red color indicates an unrecommended parking lot which has heavy traffic nearby and a small number of reservable parking spots.

In step 202, a parking lot is selected according to the parking information.

Specifically, the terminal selects one parking lot according to the parking information provided by the server.

In step 203, a parking reservation is performed based on the parking lot.

Specifically, the terminal sends a parking reservation request message to the server to request the server to reserve a parking spot based on the parking lot and receives a parking reservation success message sent by the server. The parking reservation success message is used for notifying the terminal that the parking spot is successfully reserved.

The parking reservation request message includes information related to the parking lot selected by the terminal, such as a name of the parking lot.

Here, the parking reservation success message includes information on the parking lot and the parking spot reserved for the terminal, such as a number of the reserved parking spot.

In step 204, a navigation path is generated according to a current position of the vehicle and the parking lot.

Specifically, the terminal generates the navigation path according to the current position of the vehicle and the parking lot to instruct the vehicle to arrive at the reserved parking spot.

In step 205, when the vehicle arrives at the parking lot, a parking spot lock unlocking command is sent to the server.

Specifically, when the vehicle arrives at the reserved parking spot in the parking lot, the terminal sends the parking spot lock unlocking command to the server, so that the server controls a parking spot lock to unlock the reserved parking spot.

It is to be noted that in the embodiments of the present invention, the terminal is an intelligent mobile terminal configured with an Android system or an IOS system, and functions of the terminal are implemented by a client installed in the terminal. The owner of the vehicle pre-binds a number of the terminal, a license number of the vehicle, a radio frequency identification card number and a payment account number. The radio frequency identification card number is a unique identifier of the vehicle with a parking spot reservation function, that is, each vehicle capable of reserving the parking spot has a unique radio frequency identification card number.

### Method embodiment 3

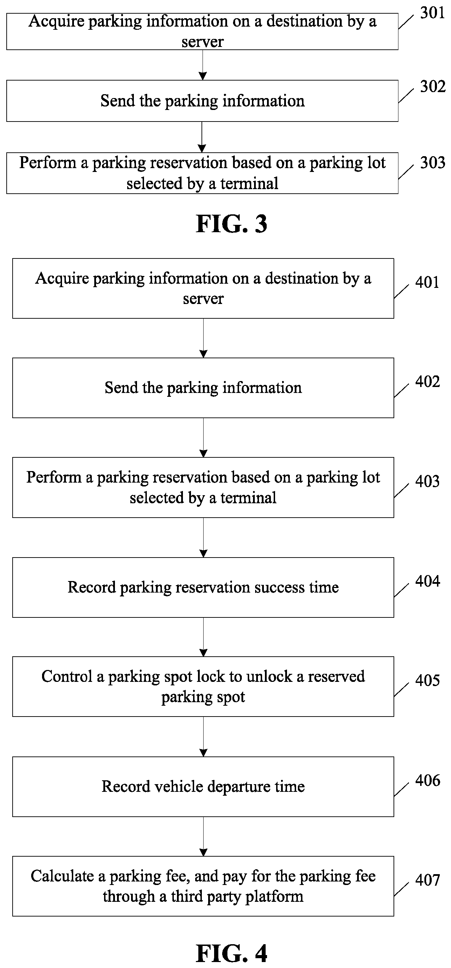

A basic process of a parking management method is provided in an embodiment 3 useful for the understanding of the present invention. As shown in FIG. 3, the basic process includes steps described below.

In step 301, a server acquires parking information on a destination.

Specifically, the server receives a parking reservation request message sent by a terminal, and selects a parking spot to be reserved according to the parking reservation request message. The parking reservation request message includes the destination of a vehicle.

The server acquires, according to the parking reservation request message sent by the terminal, the following information stored by the server: the number of parking lots at the destination, the number of parking spots in each parking lot, the number of empty parking spots in each parking lot, and traffic information of each parking lot; acquires traffic information of each parking lot from an external intelligent transport system; and determines a suggested parking lot based on the number of parking lots at the destination, the number of parking spots in each parking lot, the number of empty parking spots in each parking lot, and the traffic information of each parking lot. For example, a parking lot with light traffic from a current position of the terminal to the destination and with a large number of empty parking spots is selected. The parking lots are marked with colors, for example, a green color indicates a preferred parking lot which has light traffic nearby and a large number of reservable parking spots, and a red color indicates an unrecommended parking lot which has heavy traffic nearby and a small number of reservable parking spots.

Here, multiple interfaces are provided inside the server for communicating with the external intelligent transport system, an operation center, a traffic police system, a credit system and the like.

**In** step 302, the parking information is sent.

Specifically, the server sends the parking information to the terminal to enable the terminal to select a parking lot according to the parking information.

The parking information includes the number of parking lots at the destination, the number of parking spots in each parking lot, and the traffic information of each parking lot such as presence or absence of traffic congestion near the parking lot. The suggested parking lot is provided for the terminal according to information on the parking lots.

**In** step 303, a parking reservation is performed based on the parking lot selected by the terminal. Specifically, the server receives the parking reservation request message sent by the terminal, where the parking reservation request message includes the parking lot selected by the terminal. The server selects the parking spot to be reserved in the parking lot selected by the terminal. The server sends a parking reservation success message to the terminal to notify the terminal of information on the reserved parking lot and the reserved parking spot. The server sends a parking spot reservation notification to a parking spot lock to instruct the parking spot lock to enter a reserved mode, preventing a non-reservation vehicle from entering the reserved parking spot.

### Method embodiment 4

A detailed process of a parking management method is provided in an embodiment 4 of the present invention. As shown in FIG. 4, the detailed process includes steps described below.

In step 401, a server acquires parking information on a destination.

Specifically, the server receives a parking reservation request message sent by a terminal, and selects a parking spot to be reserved according to the parking reservation request message. The parking reservation request message includes the destination of a vehicle.

The server acquires, according to the parking reservation request message sent by the terminal, the following information stored by the server: the number of parking lots at the destination, the number of parking spots in each parking lot, the number of empty parking spots in each parking lot, and traffic information of each parking lot; acquires traffic information of each parking lot from an external intelligent transport system; and determines a suggested parking lot based on the number of parking lots at the destination, the number of parking spots in each parking lot, the number of empty parking spots in each parking lot, and the traffic information of each parking lot. For example, a parking lot with light traffic from a current position of the terminal to the destination and with a large number of empty parking spots is selected. The parking lots are marked with colors, for example, a green color indicates a preferred parking lot which has light traffic nearby and a large number of reservable parking spots, and a red color indicates an unrecommended parking lot which has heavy traffic nearby and a small number of reservable parking spots.

Here, multiple interfaces are provided inside the server for communicating with the external intelligent transport system, an operation center, a traffic police system, a credit system and the like.

In step 402, the parking information is sent.

Specifically, the server sends the parking information to the terminal to enable the terminal to select a parking lot according to the parking information.

The parking information includes the number of parking lots at the destination, the number of parking spots in each parking lot, and the traffic information of each parking lot such as presence or absence of traffic congestion near the parking lot. The suggested parking lot is provided for the terminal according to information on the parking lots.

In step 403, a parking reservation is performed based on the parking lot selected by the terminal. Specifically, the server receives the parking reservation request message sent by the terminal, where the parking reservation request message includes the parking lot selected by the terminal. The server selects the parking spot to be reserved in the parking lot selected by the terminal. The server sends a parking reservation success message to the terminal to notify the terminal of information on the reserved parking lot and the reserved parking spot. The server sends a parking spot reservation notification to a parking spot lock to instruct the parking spot lock to enter a reserved mode, preventing a non-reservation vehicle from entering the reserved parking spot.

Here, the parking reservation success message includes the information on the reserved parking lot and the reserved parking spot, such as a number of the reserved parking spot.

In step 404, parking reservation success time is recorded.

In step 405, the parking spot lock is controlled to unlock the reserved parking spot.

Specifically, when the vehicle arrives at the reserved parking spot in the parking lot, the server receives a parking spot lock unlocking command sent by the terminal, sends, according to the parking spot lock unlocking command, a parking spot lock activating message to the parking spot lock to instruct the parking spot lock to identify information of the vehicle, so as to control the parking spot lock to unlock the reserved parking spot.

Here, reservation parking spot unlocking time is recorded at the same time.

In step 406, vehicle departure time is recorded.

Specifically, the server receives a vehicle departure notification sent by the parking spot lock and records the vehicle departure time.

In step 407, a parking fee is calculated, and is paid for through a third party platform.

Specifically, the server calculates the parking fee according to the parking reservation success time, the reservation parking spot unlocking time, the vehicle departure time and a preset charging policy.

Here, the parking fee includes a first parking fee generated from the parking reservation success time to the reservation parking spot unlocking time and a second parking fee generated from the reservation parking spot unlocking time to the vehicle departure time.

In the embodiment of the present invention, a payment account number of the owner of the vehicle is bound to the server, and the parking fee is paid for through the third party platform such as WeChat or Alipay.

After the parking fee is paid for, the server notifies, through a short message, the owner of the vehicle of the parking fee generated for the parking reservation.

It is to be noted that the server in the embodiments of the present invention may be one server or a server cluster composed of multiple servers. The server or the server cluster is deployed on a cloud platform by using cloud architecture or directly deployed on the cloud platform.

### Method embodiment 5 useful for the understanding of the present invention

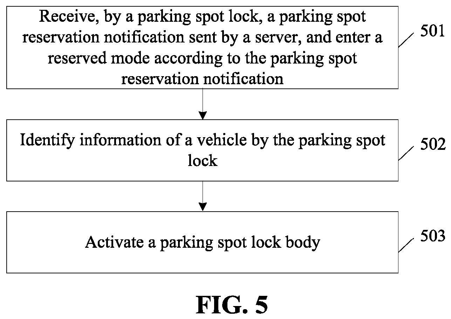

A basic process of a parking management method is provided in an embodiment 5 useful for the understanding of the present invention. As shown in FIG. 5, the basic process includes steps described below.

In step 501, a parking spot lock receives a parking spot reservation notification sent by a server, and enters a reserved mode according to the parking spot reservation notification.

Specifically, after the parking spot lock receives the parking spot reservation notification sent by the server, a front stopper arm of the parking spot lock is controlled to ascend, to enable the parking spot lock to enter the reserved mode.

Here, when the parking spot lock is in the reserved mode, only a reservation vehicle can unlock the parking spot lock and a non-reservation vehicle cannot unlock the parking spot lock.

In step 502, the parking spot lock identifies information of a vehicle.

Specifically, a radio frequency identification reader in the parking spot lock receives a parking spot lock activating message sent by the server and identifies the information of the vehicle according to the parking spot lock activating message. The parking spot lock activating message includes information on the reservation vehicle such as a radio frequency identification card number. The radio frequency identification reader stores the information on the reservation vehicle. The radio frequency identification reader matches the identified information of the vehicle with the information on the reservation vehicle stored by the radio frequency identification reader to obtain a matching result. When the matching result indicates consistency between the information of the vehicle and the information on the reservation vehicle, the radio frequency identification reader determines that the vehicle is the reservation vehicle. When the matching result indicates inconsistency between the information of the vehicle and the information on the reservation vehicle, the radio frequency identification reader determines that the vehicle is the non-reservation vehicle. When the vehicle is determined to be the reservation vehicle, a step 503 is performed.

In step 503, a parking spot lock body is activated.

Specifically, a stopper arm of the parking spot lock is controlled to descend so as to enable the vehicle to enter a reserved parking spot.

Here, the stopper arm is made of a non-ferromagnetic material such as a glass fiber-reinforced nylon so as not to impact a magnetic field generated by the parking spot lock. Meanwhile, the stopper arm may swing in two directions to prevent the parking spot lock from being shocked by an external object.

It is to be noted that the parking spot lock in the embodiments of the present invention is installed in a buried manner, and is located on a same horizontal plane as the ground or slightly higher than the ground so as to be applied to a curb parking lot. The parking spot lock is charged with a lithium battery and is fully sealed to be waterproof.

### Method embodiment 6

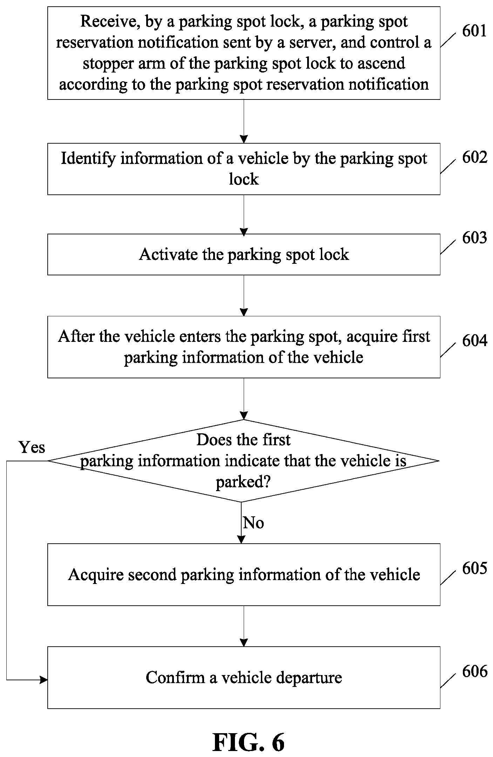

A detailed process of a parking management method is provided in an embodiment 6 of the present invention. As shown in FIG. 6, the detailed process includes steps described below.

In step 601, a parking spot lock receives a parking spot reservation notification sent by a server, and controls a stopper arm of the parking spot lock to ascend according to the parking spot reservation notification.

Specifically, the parking spot lock receives the parking spot reservation notification sent by the server, and controls the stopper arm of the parking spot lock to ascend according to the parking spot reservation notification, to prompt that a parking spot corresponding to the parking spot lock has been reserved.

During the stopper arm of the parking spot lock ascends, if a non-reservation vehicle approaches the parking spot lock, a radar sensor of the parking spot lock detects a distance between the radar sensor and the non-reservation vehicle; and when the distance is less than or equal to a preset distance threshold, the radar sensor activates an alarm system of the parking spot lock to prompt that the parking spot corresponding to the parking spot lock has been reserved.

Here, the radar sensor is installed at a middle position directly at the top of the stopper arm. When the stopper arm ascends, the radar sensor has a forward central detection direction parallel to the ground and is used for an alarm of an approaching non-reservation vehicle to prevent the parking spot lock from being shocked. The alarm system may be an audible and visual alarm system. If the non-reservation vehicle enters the reserved parking spot, the stopper arm of the parking spot lock descends due to resistance and triggers the alarm system, so that the parking spot fails to be reserved. After the resistance disappears, the stopper arm automatically ascends. The central detection direction of the radar sensor is upwards perpendicular to the parking spot when the stopper arm descends.

The radar sensor adopts an ultrasonic radar and is applied to a curb parking lot for its advantages of concentrated energy, good directivity, insensitivity to harsh external environments, simple structure, small size, convenience and low costs.

In step 602, the parking spot lock identifies information of a vehicle.

Specifically, a radio frequency identification reader in the parking spot lock receives a parking spot lock activating message sent by the server and identifies the information of the vehicle according to the parking spot lock activating message. The parking spot lock activating message includes information on a reservation vehicle such as a radio frequency identification card number. The radio frequency identification reader stores the information on the reservation vehicle. The radio frequency identification reader matches the identified information of the vehicle with the information on the reservation vehicle stored by the radio frequency identification reader to obtain a matching result. When the matching result indicates consistency between the information of the vehicle and the information on the reservation vehicle, the radio frequency identification reader determines that the vehicle is the reservation vehicle. When the matching result indicates inconsistency between the information of the vehicle and the information on the reservation vehicle, the radio frequency identification reader determines that the vehicle is the non-reservation vehicle.

In step 603, the parking spot lock is activated.

Specifically, the stopper arm of the parking spot lock is controlled to descend so as to enable the vehicle to enter the parking spot.

In step 604, after the vehicle enters the parking spot, first parking information of the vehicle is acquired.

Specifically, a geomagnetic vehicle detector in the parking spot lock detects a magnetic field of the parking spot corresponding to the parking spot lock, acquires the first parking information of the vehicle, and sends the first parking information to the server.

The first parking information is used for representing a parking state of the vehicle, such as a parked state or uncertain parking. When a first parking state is the parked state, a step 606 is performed. When the first parking state is the uncertain parking, a step 605 is performed.

In step 605, second parking information of the vehicle is acquired.

Specifically, the radar sensor receives a second parking information acquisition notification sent by the server, detects the information of the vehicle according to the second parking information acquisition notification, and acquires the second parking information.

The second parking information indicates that the parking state of the vehicle is the parked state or the uncertain parking.

Here, the information of the vehicle is further detected by the radar sensor to confirm the parking state of the vehicle, so that the accuracy in determination of the parking state can be improved. When the parked state is confirmed, the radio frequency identification reader and the radar sensor are deactivated to control the radio frequency identification reader and the radar sensor to be a standby state to reduce power consumption of the parking spot lock.

It is to be noted that in the embodiments of the present invention, the geomagnetic vehicle detector communicates with the parking spot lock through an Internet of Things (IoT) technology, and both are connected to the server through a mobile Internet. If a LoRa technology is adopted, the geomagnetic vehicle detector communicates with the parking spot lock through an IoT gateway. If a Narrowband-Internet of Things (NB-IoT) technology is adopted, the geomagnetic vehicle detector and the parking spot lock directly communicate with a base station of a mobile operator. The geomagnetic vehicle detector may be deployed separately or inside a parking spot lock body. The radar sensor is in a sleep state during a parking spot reservation is not performed and during a vehicle departure is determined, to reduce the power consumption of the parking spot lock.

In step 606, the vehicle departure is confirmed.

Specifically, when the geomagnetic vehicle detector detects that the vehicle leaves the parking spot, the geomagnetic vehicle detector notifies the server and the server triggers the radio frequency identification reader and the radar sensor to further confirm whether the parking spot is occupied. When the radio frequency identification reader and the radar sensor confirm that the parking spot is empty, a vehicle departure notification is sent to the server to trigger the server to calculate a parking fee.

Method embodiment 7 useful for the understanding of the present invention

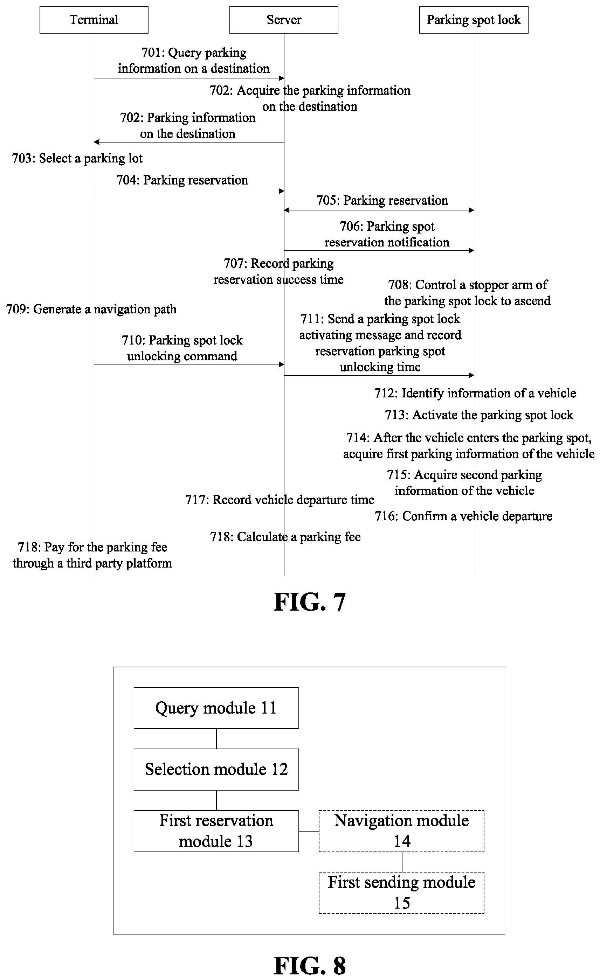

A detailed process of a parking management method is provided in an embodiment 7 useful for the understanding of the present invention. As shown in FIG. 7, the detailed process includes steps described below.

**In** step 701, a terminal queries, from a server, parking information on a destination.

Specifically, the terminal sends a parking information query request message carrying the destination of a vehicle to a server to request a query of information on parking lots at the destination and receives the parking information sent by the server.

The parking information includes the number of parking lots at the destination, the number of parking spots in each parking lot, and traffic information of each parking lot such as presence or absence of traffic congestion near the parking lot. A suggested parking lot is provided for the terminal according to the information on the parking lots. The parking lots are marked with colors, for example, a green color indicates a preferred parking lot which has light traffic nearby and a large number of reservable parking spots, and a red color indicates an unrecommended parking lot which has heavy traffic nearby and a small number of reservable parking spots.

In step 702, the server acquires the parking information on the destination and sends the parking information to the terminal.

Specifically, the server receives a parking reservation request message sent by the terminal, and selects a parking spot to be reserved according to the parking reservation request message. The parking reservation request message includes the destination of the vehicle.

The server acquires, according to the parking reservation request message sent by the terminal, the following information stored by the server: the number of parking lots at the destination, the number of parking spots in each parking lot, the number of empty parking spots in each parking lot, and the traffic information of each parking lot; acquires traffic information of each parking lot from an external intelligent transport system; and determines a suggested parking lot based on the number of parking lots at the destination, the number of parking spots in each parking lot, the number of empty parking spots in each parking lot, and the traffic information of each parking lot. For example, a parking lot with light traffic from a current position of the terminal to the destination and with a large number of empty parking spots is selected. The parking lots are marked with colors, for example, the green color indicates the preferred parking lot which has light traffic nearby and the large number of reservable parking spots, and the red color indicates the unrecommended parking lot which has heavy traffic nearby and the small number of reservable parking spots.

Here, multiple interfaces are provided inside the server for communicating with the external intelligent transport system, an operation center, a traffic police system, a credit system and the like.

In step 703, the terminal selects a parking lot according to the parking information.

In step 704, the terminal performs a parking reservation based on the parking lot.

Specifically, the terminal sends the parking reservation request message to the server to request the server to reserve a parking spot based on the parking lot.

The parking reservation request message includes information related to the parking lot selected by the terminal, such as a name of the parking lot.

Here, a parking reservation success message includes information on the parking lot and the parking spot reserved for the terminal, such as a number of the reserved parking spot.

In step 705, the server performs the parking reservation based on the parking lot selected by the terminal and sends the parking reservation success message to the terminal.

Specifically, the server reserves the parking spot in the parking lot selected by the terminal.

The parking reservation success message is used for notifying the terminal that the parking spot is successfully reserved.

In step 706, the server sends a parking spot reservation notification to a parking spot lock to instruct the parking spot lock to enter a reserved mode.

In step 707, the server records parking reservation success time.

Here, an execution sequence of step 706 and step 707 is not limited; step 706 may be performed before step 707, step 707 may be performed before step 706, or step 706 and step 707 may be simultaneously performed.

In step 708, the parking spot lock controls a stopper arm of the parking spot lock to ascend according to the parking spot reservation notification.

Specifically, the parking spot lock receives the parking spot reservation notification sent by the server, and controls the stopper arm of the parking spot lock to ascend according to the parking spot reservation notification, to prompt that a parking spot corresponding to the parking spot lock has been reserved.

During the stopper arm of the parking spot lock ascends, if a non-reservation vehicle approaches the parking spot lock, a radar sensor of the parking spot lock detects a distance between the radar sensor and the non-reservation vehicle; and when the distance is less than or equal to a preset distance threshold, the radar sensor activates an alarm system of the parking spot lock to prompt that the parking spot corresponding to the parking spot lock has been reserved.

Here, the radar sensor is installed at a middle position directly at the top of the stopper arm. When the stopper arm ascends, the radar sensor has a forward central detection direction parallel to the ground and is used for an alarm of an approaching non-reservation vehicle to prevent the parking spot lock from being shocked. The alarm system may be an audible and visual alarm system. If the non-reservation vehicle enters the reserved parking spot, the stopper arm of the parking spot lock descends due to resistance and triggers the alarm system, so that the parking spot fails to be reserved. After the resistance disappears, the stopper arm automatically ascends. The central detection direction of the radar sensor is upwards perpendicular to the parking spot when the stopper arm descends.

The radar sensor adopts an ultrasonic radar and is applied to a curb parking lot for its advantages of concentrated energy, good directivity, insensitivity to harsh external environments, simple structure, small size, convenience and low costs.

In step 709, the terminal generates a navigation path according to a current position of the vehicle and the parking lot.

Specifically, the terminal starts a global positioning system (GPS) of the terminal and generates the navigation path according to the current position of the vehicle and the parking lot to instruct the vehicle to arrive at the reserved parking spot.

Here, the GPS may operate in the foreground or may also operate in the background.

In step 710, when the vehicle arrives at the parking spot lock, the terminal sends a parking spot lock unlocking command to the server.

In step 711, the server sends a parking spot lock activating message to the parking spot lock according to the parking spot lock activating message and records reservation parking spot unlocking time.

In step 712, the parking spot lock identifies information of the vehicle.

Specifically, a radio frequency identification reader in the parking spot lock receives the parking spot lock activating message sent by the server and identifies the information of the vehicle according to the parking spot lock activating message. The parking spot lock activating message includes information on the reservation vehicle such as a radio frequency identification card number. The radio frequency identification reader stores the information on the reservation vehicle. The radio frequency identification reader matches the identified information of the vehicle with the information on the reservation vehicle stored by the radio frequency identification reader to obtain a matching result. When the matching result indicates consistency between the information of the vehicle and the information on the reservation vehicle, the radio frequency identification reader determines that the vehicle is the reservation vehicle. When the matching result indicates inconsistency between the information of the vehicle and the information on the reservation vehicle, the radio frequency identification reader determines that the vehicle is the non-reservation vehicle. When the vehicle is determined to be the reservation vehicle, a step 713 is performed.

In step 713, the parking spot lock is activated.

Specifically, the stopper arm of the parking spot lock is controlled to descend so as to enable the vehicle to enter the parking spot.

In step 714, after the vehicle enters the parking spot, first parking information of the vehicle is acquired.

Specifically, a geomagnetic vehicle detector in the parking spot lock detects a magnetic field of the parking spot corresponding to the parking spot lock, acquires the first parking information of the vehicle, and sends the first parking information to the server.

The first parking information is used for representing a parking state of the vehicle, such as a parked state or uncertain parking. When a first parking state is the parked state, a step 716 is performed. When the first parking state is the uncertain parking, a step 715 is performed.

In step 715, second parking information of the vehicle is acquired.

Specifically, the radar sensor receives a second parking information acquisition notification sent by the server, detects the information of the vehicle according to the second parking information acquisition notification, and acquires the second parking information.

The second parking information indicates that the parking state of the vehicle is the parked state or the uncertain parking. When the second parking information indicates that the parking state of the vehicle is the parked state, a step 716 is performed.

Here, the information of the vehicle is further detected by the radar sensor to confirm the parking state of the vehicle, so that an accuracy in determination of the parking state can be improved. When the parked state is confirmed, the radio frequency identification reader and the radar sensor are deactivated to control the radio frequency identification reader and the radar sensor to be a standby state to reduce power consumption of the parking spot lock.

It is to be noted that in the embodiments of the present invention, the geomagnetic vehicle detector communicates with the parking spot lock through an IoT technology, and they are connected to the server through a mobile Internet. If a LoRa technology is adopted, the geomagnetic vehicle detector communicates with the parking spot lock through an IoT gateway. If an NB-IoT technology is adopted, the geomagnetic vehicle detector and the parking spot lock directly communicate with a base station of a mobile operator. The geomagnetic vehicle detector may be deployed separately or inside a parking spot lock body. The radar sensor is in a sleep state during a parking spot reservation is not performed and during a vehicle departure is determined, to reduce the power consumption of the parking spot lock.

In step 716, the vehicle departure is confirmed.

Specifically, when the geomagnetic vehicle detector detects that the vehicle leaves the parking spot, the geomagnetic vehicle detector notifies the server and the server triggers the radio frequency identification reader and the radar sensor to further confirm whether the parking spot is occupied by the vehicle. When the radio frequency identification reader and the radar sensor confirm that the parking spot is empty, a vehicle departure notification is sent to the server to trigger the server to calculate a parking fee.

In step 717, the server records vehicle departure time.

Specifically, the server receives the vehicle departure notification sent by the parking spot lock and records the vehicle departure time.

In step 718, the parking fee is calculated, and is paid for through a third party platform.

Specifically, the server calculates the parking fee according to the parking reservation success time, the reservation parking spot unlocking time, the vehicle departure time and a preset charging policy, and notifies the terminal of the parking fee. The terminal pays for the parking fee through the third party platform.

The parking fee includes a first parking fee generated from the parking reservation success time to the reservation parking spot unlocking time and a second parking fee generated from the reservation parking spot unlocking time to the vehicle departure time.

In the embodiment of the present invention, a payment account number of an owner of the vehicle is bound to the server, and the parking fee is paid for through the third party platform such as WeChat or Alipay.

After the parking fee is paid for, the server notifies, through a short message, the owner of the vehicle of the parking fee generated for the parking reservation.

It is to be noted that the server in the embodiments of the present invention may be one server or a server cluster composed of multiple servers. The server or the server cluster is deployed on a cloud platform by using cloud architecture or directly deployed on the cloud platform.

### Embodiment 8 useful for the understanding of the present invention

To implement the parking management method described above, a terminal is further provided in an embodiment 8 useful for the understanding of the present invention. A structure of the terminal, as shown in FIG. 8, includes a query module 11, a selection module 12 and a first reservation module 13.

The query module 11 is configured to query parking information on a destination.

The selection module 12 is configured to select a parking lot according to the parking information. The first reservation module 13 is configured to perform a parking reservation based on the parking lot.

In a specific implementation mode, the first reservation module 13 is configured to send a parking reservation request message, to request a server to reserve a parking spot based on the parking lot; and receive a parking reservation success message. The parking reservation success message includes information on the reserved parking lot and the reserved parking spot.

The parking reservation request message includes information related to the parking lot selected by the terminal, such as a name of the parking lot. The parking reservation success message includes the information on the parking lot and the parking spot reserved for the terminal, such as a number of the reserved parking spot.

In a specific implementation mode, the terminal further includes a navigation module 14, which is configured to generate a navigation path according to a current position of a vehicle and the parking lot to instruct the vehicle to arrive at the reserved parking spot.

In a specific implementation mode, the query module 11 is configured to send a parking information query request message to the server and receive the parking information sent by the server.

The parking information includes the number of parking lots at the destination, the number of parking spots in each parking lot, the number of empty parking spots in each parking lot, traffic information of each parking lot, and a suggested parking lot. The parking lots are marked with colors, for example, a green color indicates a preferred parking lot which has light traffic nearby and a large number of reservable parking spots, and a red color indicates an unrecommended parking lot which has heavy traffic nearby and a small number of reservable parking spots.

In a specific implementation mode, the terminal further includes a first sending module 15, which is configured to: when the vehicle arrives at the parking lot, send a parking spot lock unlocking command to the server, so that the server controls a parking spot lock to unlock the reserved parking spot.

It is to be noted that in the embodiments of the present invention, the terminal is an intelligent mobile terminal configured with an Android system or an IOS system, and functions of the terminal are implemented by a client installed in the terminal. the owner of the vehicle pre-binds a number of the terminal, a license number of the vehicle, a radio frequency identification card number and a payment account number. The radio frequency identification card number is a unique identifier of the vehicle with a parking spot reservation function, that is, each vehicle capable of reserving the parking spot has a unique radio frequency identification card number.

### Embodiment 9 useful for the understanding of the present invention

To implement the parking management method described above, a server is further provided in an embodiment 9 useful for the understanding of the present invention. A structure of the terminal, as shown in FIG. 8, includes an acquisition module 21, a second sending module 22 and a second reservation module 23.

The acquisition module 21 is configured to acquire parking information on a destination.

The second sending module 22 is configured to send the parking information to enable a terminal to select a parking lot according to the parking information.

The second reservation module 23 is configured to perform a parking reservation based on the parking lot selected by the terminal.

In a specific implementation mode, the second reservation module 23 is configured to receive a parking reservation request message sent by the terminal, and select a parking spot to be reserved according to the parking reservation request message; send a parking reservation success message based on the reserved parking spot to notify the terminal of information on the reserved parking lot and the reserved parking spot, and send a parking spot reservation notification to instruct a parking spot lock to enter a reserved mode.

In a specific implementation mode, the server further includes a first receiving module 24 and a control module 25. The first receiving module 24 is configured to receive a parking spot lock unlocking command sent by the terminal.

The control module 25 is configured to control the parking spot lock to unlock the reserved parking spot according to the parking spot lock unlocking command.

In a specific implementation mode, the acquisition module 21 is configured to receive a parking information query request message sent by the terminal; acquire, according to the parking information query request message, the following information stored by the server: the number of parking lots at the destination, the number of parking spots in each parking lot, the number of empty parking spots in each parking lot, and traffic information of each parking lot; acquire traffic information of each parking lot from an external intelligent transport system; and determine a suggested parking lot based on the number of parking lots at the destination, the number of parking spots in each parking lot, the number of empty parking spots in each parking lot, and the traffic information of each parking lot. For example, a parking lot with light traffic from a current position of the terminal to the destination and with a large number of empty parking spots is selected. The parking lots are marked with colors, for example, a green color indicates a preferred parking lot which has light traffic nearby and a large number of reservable parking spots, and a red color indicates an unrecommended parking lot which has heavy traffic nearby and a small number of reservable parking spots.

In a specific implementation mode, the control module 25 is configured to send a parking spot lock activating message to the parking spot lock to instruct the parking spot lock to identify information of a vehicle.

In a specific implementation mode, the server further includes a recording module 26, which is configured to record parking reservation success time and reservation parking spot unlocking time.

The first receiving module 24 is further configured to receive a vehicle departure notification sent by the parking spot lock.

Accordingly, the recording module 26 is further configured to record vehicle departure time and calculate a parking fee according to the parking reservation success time, the reservation parking spot unlocking time, the vehicle departure time and a preset charging policy.

In a specific implementation mode, the server further includes a payment module 27, which is configured to pay for the parking fee through a third party platform.

Here, the parking fee includes a first parking fee generated from the parking reservation success time to the reservation parking spot unlocking time and a second parking fee generated from the reservation parking spot unlocking time to the vehicle departure time.

It is to be noted that multiple interfaces are provided inside the server for communicating with the external intelligent transport system, an operation center, a traffic police system, a credit system and the like. A payment account number of the owner of the vehicle is bound to the server, and the parking fee is paid for through the third party platform such as WeChat or Alipay. The server in the embodiment of the present invention may be one server or a server cluster composed of multiple servers. The server or the server cluster is deployed on a cloud platform by using cloud architecture or directly deployed on the cloud platform.

### Embodiment 10

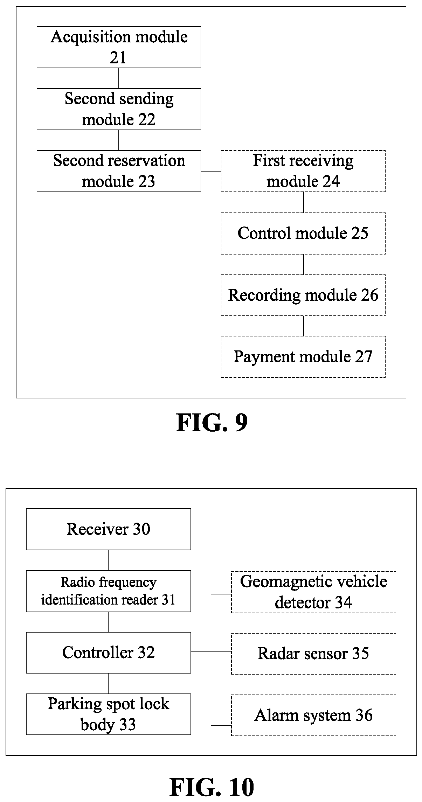

To implement the parking management method described above, a parking spot lock is further provided in an embodiment 10 of the present invention. A structure of the parking spot lock, as shown in FIG. 10, includes a receiver 30, a radio frequency identification reader 31, a controller 32 and a parking spot lock body 33.

The receiver 30 is configured to receive a parking spot reservation notification sent by a server, and control the parking spot lock body 33 to enter a reserved mode according to the parking spot reservation notification.

The radio frequency identification reader 31 is configured to identify information of a vehicle, and determine whether the vehicle is a reservation vehicle according to the information of the vehicle.

The controller 32 is configured to, when the vehicle is determined to be the reservation vehicle, activate the parking spot lock body 33 to enable the vehicle to enter a parking spot corresponding to the parking spot lock.

In a specific implementation mode, the radio frequency identification reader 31 is configured to: receive a parking spot lock activating message sent by the server such as a radio frequency identification card number of the vehicle, and store information on the reservation vehicle; identify the information of the vehicle according to the parking spot lock activating message, and match the information of the vehicle with the information on the reservation vehicle stored by the parking spot lock to obtain a matching result; and when the matching result indicates consistency between the information of the vehicle and the information on the reservation vehicle, determine that the vehicle is the reservation vehicle.

In a specific implementation mode, the controller 32 is further configured to control a stopper arm of the parking spot lock to descend, to enable the vehicle to enter the parking spot.

In a specific implementation mode, the parking spot lock further includes a geomagnetic vehicle detector 34, which is configured to: after the vehicle enters the parking spot, detect a magnetic field of the parking spot corresponding to the parking spot lock, acquire first parking information of the vehicle, and send the first parking information to the server.

The first parking information is used for representing a parking state of the vehicle.

In a specific implementation mode, the parking spot lock further includes a radar sensor 35, which is configured to: receive a second parking information acquisition notification sent by the server; detect the information of the vehicle according to the second parking information acquisition notification, and acquire second parking information; and send the second parking information to the server.

In a specific implementation mode, the controller 32 is further configured to receive a standby notification sent by the server, and control, according to the standby notification, the radio frequency identification reader 31 and the radar sensor 35 to be in a standby state.

In a specific implementation mode, the controller 32 is further configured to receive the parking spot reservation notification sent by the server, and control, according to the parking spot reservation notification, the stopper arm of the parking spot lock to ascend, to enable the parking spot lock to enter the reserved mode.

During the stopper arm of the parking spot lock ascends, if a non-reservation vehicle approaches the parking spot lock, the radar sensor of the parking spot lock detects a distance between the radar sensor and the non-reservation vehicle; and when the distance is less than or equal to a preset distance threshold, the radar sensor activates an alarm system of the parking spot lock to prompt that the parking spot corresponding to the parking spot lock has been reserved.

Here, the radar sensor is installed at a middle position directly at the top of the stopper arm, has a forward central detection direction parallel to the ground when the stopper arm ascends and is used for an alarm of an approaching non-reservation vehicle to prevent the parking spot lock from being shocked. The alarm system may be an audible and visual alarm system. If the non-reservation vehicle enters the reserved parking spot, the stopper arm of the parking spot lock descends due to resistance and triggers the alarm system, so that the parking spot fails to be reserved. After the resistance disappears, the stopper arm automatically ascends. The central detection direction of the radar sensor is upwards perpendicular to the parking spot when the stopper arm descends.

The radar sensor adopts an ultrasonic radar and is applied to a curb parking lot for its advantages of concentrated energy, good directivity, insensitivity to harsh external environments, simple structure, small size, convenience and low costs.

In a specific implementation mode, the parking spot lock further includes the alarm system 36, which is configured to prompt that the parking spot corresponding to the parking spot lock has been reserved.

In a specific implementation mode, the controller 32 is further configured to control the stopper arm of the parking spot lock to descend, and send a parking spot reservation failure message to the server.

In a specific implementation mode, the radar sensor 35 is further configured to detect the distance between the radar sensor and the vehicle; and when the distance is less than or equal to the preset distance threshold, activate the alarm system 36 of the parking spot lock.

Accordingly, the alarm system 36 is further configured to prompt that the parking spot corresponding to the parking spot lock has been reserved.

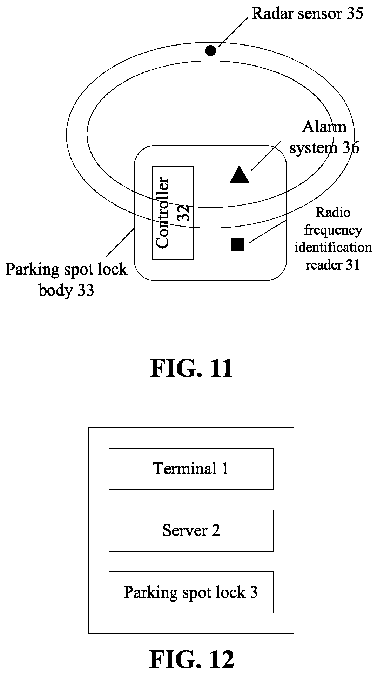

In summary, a cross-sectional view of the parking spot lock in the embodiment of the present invention is shown in FIG. 11.

In the embodiment of the present invention, the stopper arm is made of a non-ferromagnetic material such as a glass fiber-reinforced nylon so as not to impact a magnetic field generated by the parking spot lock. Meanwhile, the stopper arm may swing in two directions to prevent the parking spot lock from being shocked by an external object. The parking spot lock is mounted in a buried manner, and is located on a same horizontal plane as the ground or slightly higher than the ground to be applied to the curb parking lot. The parking spot lock is charged with a lithium battery and is fully sealed to be waterproof. The geomagnetic vehicle detector communicates with the parking spot lock through an IoT technology, and they are connected to the server through a mobile Internet. If a LoRa technology is adopted, the geomagnetic vehicle detector communicates with the parking spot lock through an IoT gateway. If an NB-IoT technology is adopted, the geomagnetic vehicle detector and the parking spot lock directly communicate with a base station of a mobile operator. The geomagnetic vehicle detector may be deployed separately or inside the parking spot lock body. The radar sensor is in a sleep state during a parking spot reservation is not performed and during a vehicle departure is determined, to reduce power consumption of the parking spot lock.

### Embodiment 11 useful for the understanding of the present invention

An embodiment useful for the understanding of the present invention further provides a parking management system. A structural diagram of the system is shown in FIG. 12, and the system includes a terminal 1, a server 2 and a parking spot lock 3. The terminal 1, the server 2 and the parking spot lock 3 execute same functions as those executed in the above-mentioned embodiment 8, embodiment 9 and embodiment 10. The server 2 performs information interactions with the terminal 1 and the parking spot lock 3 through a mobile communication network, and information interactions inside the parking spot lock 3 may be performed through an IoT gateway.

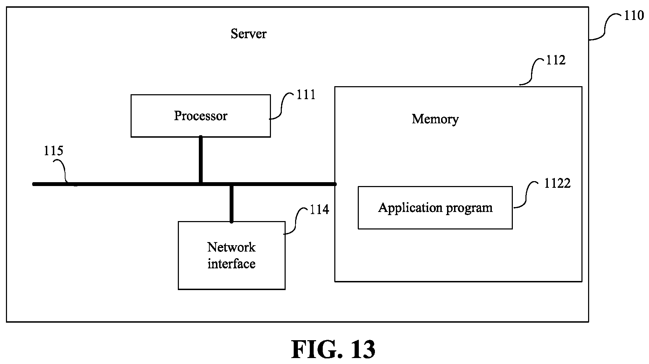

An embodiment useful for the understanding of the present invention further provides a server. A structural diagram illustrating hardware of the server is shown in FIG. 13. The server 110 includes at least one processor 111, a memory 112 and at least one network interface 114. Various components in the server 110 are coupled together via a bus system 115. It may be understood that the bus system 115 is configured to implement connections and communications among these components. In addition to a data bus, the bus system 115 further includes a power bus, a control bus and a state signal bus. However, for clarity of description, various buses are all marked as the bus system 115 in FIG. 13.

It may be understood that the memory 112 may be a volatile memory or a non-volatile memory, or may include both the volatile memory and the non-volatile memory. The non-volatile memory may be a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk or a compact disc read-only memory (CD-ROM). The magnetic surface memory may be a magnetic disk memory or a magnetic tape memory. The volatile memory may be a random access memory (RAM), which serves as an external cache. By way of an illustrative description rather than a limited description, many forms of RAMs may be used, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a SyncLink dynamic random access memory (SLDRAM) and a direct Rambus random access memory (DRRAM). The memory 112 described in the embodiment of the present invention is intended to include, but is not limited to, these memories and any other suitable type of memory. The memory 112 in the embodiment of the present invention is configured to store various types of data to support operations of the server 110. Examples of the various types of data include any computer program, such as an application program 1122, operated on the server 110. Programs for implementing the methods in the embodiments of the present invention may be included in the application program 1122.

The methods disclosed by the embodiments of the present invention may be applied to the processor 111 or may be implemented by the processor 111. The processor 111 may be an integrated circuit chip with a signal processing capability. In the implementation process, various steps of the methods described above may be performed by an integrated logic circuit of hardware or a software instruction in the processor 111. The processor 111 described above may be a general-purpose processor, a digital signal processor (DSP), or another programmable logic device, another discrete gate or transistor logic device, another discrete hardware component or the like. The processor 111 may implement or execute various methods, steps and logic block diagrams disclosed by the embodiments of the present invention. The general-purpose processor may be a microprocessor or any conventional processor. The steps of the methods disclosed by the embodiments of the present invention may be directly implemented by a hardware decoding processor, or may be implemented by a combination of hardware and software modules in the decoding processor. The software module may be located in a storage medium which is located in the memory 112. The processor 111 reads information in the memory 112 and implements the steps of the methods described above in combination with hardware of the processor 111.

In an exemplary embodiment, the server 110 may be implemented by one or more application specific integrated circuits (ASICs), DSPs, programmable logic devices (PLDs), complex programmable logic devices (CPLDs), field-programmable gate arrays (FPGAs), general-purpose processors, controllers, micro controller units (MCUs) or micro processor units (MPUs), or other electronic elements for executing the methods described above.

An embodiment of the present disclosure further provides a storage medium configured to store executable programs which, when executed by a processor, implement the above-mentioned parking management method performed by a server.

An embodiment of the present disclosure further provides another storage medium configured to store executable programs which, when executed by a processor, implement the above-mentioned parking management method performed by a parking spot lock.

The present invention is described with reference to flowcharts and/or block diagrams of methods, apparatuses (systems) and computer program products according to the embodiments of the present invention. It is to be understood that computer program instructions may implement each flow and/or block in the flowcharts and/or the block diagrams and a combination of flows and/or blocks in the flowcharts and/or the block diagrams. These computer program instructions may be provided for a general-purpose computer, a special-purpose computer, an embedded processor or a processor of another programmable data processing apparatus to produce a machine so that instructions executed by the computer or the processor of another programmable data processing apparatus produce a means for implementing functions designated in one or more flows in the flowcharts and/or one or more blocks in the block diagrams.

These computer program instructions may also be stored in a computer-readable memory which can cause the computer or another programmable data processing apparatus to operate in a particular manner so that the instructions stored in the computer-readable memory produce a manufactured product including an instructing means. The instructing means implements the functions designated in the one or more flows in the flowcharts and/or the one or more blocks in the block diagrams.

These computer program instructions may also be loaded onto the computer or another programmable data processing apparatus so that a series of operation steps are performed on the computer or another programmable apparatus to produce processing implemented by the computer. Therefore, instructions executed on the computer or another programmable apparatus provide steps for implementing the functions designated in the one or more flows in the flowcharts and/or the one or more blocks in the block diagrams.

It is to be noted that in practical applications, functions executed by the query module 11, the selection module 12, the first reservation module 13, the navigation module 14 and the first sending module 15 may be implemented by a CPU, an MPU, a DSP or an FPGA located on the terminal; functions executed by the acquisition module 21, the second sending module 22, the second reservation module 23, the first receiving module 24 and the control module 25 may be implemented by a CPU, an MPU, a DSP or an FPGA located on the server.

## Claims

1. A parking management method, performed by a server, comprising:
receiving a first parking reservation request message sent by a terminal, wherein the first parking reservation request message comprises a destination of a vehicle;
acquiring, according to the first parking reservation request message, the following information stored by the server: the number of parking lots at the destination, the number of parking spots in each parking lot, the number of empty parking spots in each parking lot;
acquiring traffic information of each parking lot from an external intelligent transport system;
**characterized by** determining, by the server, a suggested parking lot based on the number of the parking lots at the destination, the number of the parking spots in each of the parking lots, the number of the empty parking spots in each of the parking lots, and the traffic information of each of the parking lots;
(402) sending parking information to the terminal to enable the terminal to select a parking lot according to the parking information, wherein the parking information
comprises: the number of parking lots at the destination, the number of parking spots in each parking lot, and the traffic information of each parking lot and the suggested parking lot;
receiving a second parking reservation request message sent by the terminal, wherein the second parking reservation request message comprises the parking lot selected by the terminal;
selecting, by the server, a parking spot to be reserved in the parking lot selected by the terminal;
sending a parking reservation success message to the terminal to notify the terminal of information on a reserved parking lot and a reserved parking spot, wherein the reserved parking lot corresponds to the selected parking lot of the terminal, and the reserved parking spot corresponds to the selected parking spot of the server; and
sending, by the server, a parking spot reservation notification to a parking spot lock of the reserved parking spot to instruct the parking spot lock to enter a reserved mode, configured to prevent a non-reservation vehicle from entering the reserved parking spot;
receiving a parking spot lock unlocking command sent by the terminal when the vehicle arrives at the reserved parking spot in the parking lot; and
sending, by the server, according to the parking spot lock unlocking command, a parking spot lock activating message to the parking spot lock to instruct the parking spot lock to identify information of the vehicle so as to control the parking spot lock to unlock the reserved parking spot.

2. The method of claim 1, further comprising:
after sending the parking reservation success message, recording (404) parking reservation success time;
after receiving the parking spot lock unlocking command sent by the terminal, recording reservation parking spot unlocking time;
receiving a vehicle departure notification sent by the parking spot lock and (406) recording vehicle departure time; and
(407) calculating a parking fee according to the parking reservation success time, the reservation parking spot unlocking time, the vehicle departure time and a preset charging policy.

3. The method of claim 2, wherein the parking fee is paid through a third party platform.

4. A parking management method according to claim 1, further comprising the following steps performed by the parking spot lock:
(601) receiving, by the parking spot lock, the parking spot reservation notification sent by the server;
controlling (601), by the parking spot lock, a stopper arm of the parking spot lock to enter a reserved mode according to the parking spot reservation notification, wherein the reserved mode is used to prevent a non-reservation vehicle from entering a parking spot corresponding to the parking spot lock;
(602) identifying, by the parking spot lock, information of a vehicle, and determining, by the parking spot lock, whether the vehicle is a reservation vehicle according to information of the vehicle; and
in response to determining that the vehicle is the reservation vehicle according to the information of the vehicle, controlling, by the parking spot lock, the stopper arm of the parking spot lock to descend to enable the vehicle to enter a parking spot corresponding to the parking spot lock.

5. The method of claim 4, wherein (602) identifying, by the parking spot lock, the information of the vehicle, and determining, by the parking spot lock, whether the vehicle is the reservation vehicle according to the information of the vehicle comprises:
receiving, by a radio-frequency identification, RFID, reader in the parking spot lock, a parking spot lock activating message sent by the server;
identifying, by the RFID reader (31), the information of the vehicle according to the parking spot lock activating message;
matching, by the RFID reader, the information of the vehicle with information of the reservation vehicle stored by the RFID reader to obtain a matching result; and
in response to determining that the matching result indicates consistency between the information of the vehicle and the information of the reservation vehicle, determining, by the RFID reader, that the vehicle is the reservation vehicle.

6. The method of claim 4, wherein after the vehicle enters the parking spot, the method further comprises:
detecting, by a geomagnetic vehicle detector of the parking spot lock, a magnetic field of the parking spot, and (604) acquiring first parking information of the vehicle; and
sending, by the parking spot lock, the first parking information to the server;
wherein the first parking information indicates a first parking state of the vehicle, and the first parking state comprises a parked state and an uncertain parking state.

7. The method of claim 6, wherein in response to determining that the first parking state is the uncertain parking state, the method further comprising:
receiving, by a radar sensor of the parking spot lock, a parking information acquisition notification sent by the server,
detecting, by the radar sensor, the information of the vehicle according to the parking information acquisition notification,
(605) acquiring, by the radar sensor, second parking information of the vehicle; and
sending, by the parking spot lock, the second parking information to the server;
wherein the second parking information is used to indicate a second parking state of the vehicle, and the second parking state comprises a parked state and an uncertain parking state.

8. The method of claim 6, wherein the method further comprises:
detecting, by the geomagnetic vehicle detector, the vehicle leaves the parking spot;
notifying, by the geomagnetic vehicle detector, the server to trigger the RFID reader and the radar sensor to confirm whether the parking spot is occupied; and
in response to confirming that the parking spot is empty, sending, by the parking spot lock, a vehicle departure notification to the server to trigger the server to calculate a parking fee.

9. The method of claim 4, wherein the method further comprises:
in response to detecting that the non-reservation vehicle enters the parking spot and that the stopper arm of the parking spot lock descends, sending, by the parking spot lock, a parking spot reservation failure message to the server.

10. The method of claim 4, wherein during the ascending of the stopper arm, the method further comprises:
in response to detecting that the non-reservation vehicle approaching the parking spot lock, detecting, by a radar sensor of the parking spot lock, a distance between the radar sensor and the non-reservation vehicle; and
in response to determining that the distance between the radar sensor and the non-reservation vehicle is less than or equal to a preset distance threshold, activating, by the radar sensor, an alarm system of the parking spot to prompt that the parking spot has been reserved.

11. A system comprising a server and a parking spot lock, wherein the server is configured to perform the method of claim 1 and wherein the parking spot lock comprises:
a receiver (30), a radio frequency identification, RFID, reader (31), a controller (32), a parking spot lock body (33), a geomagnetic vehicle sensor (34), a radar sensor (35), and an alarm system (36); wherein
the receiver (30) is configured to receive a parking spot reservation notification sent by a server, and control the parking spot lock body (33) to enter a reserved mode according to the parking spot reservation notification;
the RFID reader (31) is configured to identify information of the vehicle, and determine whether the vehicle is a reservation vehicle according to the information of the vehicle;
the controller (32) is configured to, in response to determining that the vehicle is the reservation vehicle, activate the parking spot lock body (33) to enable the vehicle to enter a parking spot corresponding to the parking spot lock;
the geomagnetic vehicle sensor (34) is configured to: after the vehicle enters the parking spot, detect a magnetic field of the parking spot corresponding to the parking spot lock, acquire first parking information of the vehicle, and send the first parking information to the server, wherein the first parking information indicates a first parking state of the vehicle;
the radar sensor (35) is configured to receive a parking information acquisition notification sent by the server, detect the information of the vehicle according to the parking information acquisition notification, acquire second parking information, and send the second parking information to the server,
the alarm system (36) is configured to prompt that the parking spot corresponding to the parking spot lock has been reserved.

12. The parking spot lock of claim 11, wherein the radar sensor (35) is installed at a middle position at the top of a stopper arm of the parking spot lock body (33), and the radar sensor (35) is configured as following:
in a case where the stopper arm has ascended, the radar sensor (35) has a central detection direction parallel to the ground and is used for an alarm of an approaching non-reservation vehicle; and
in a case where the stopper arm has descended, the radar sensor (35) has a central detection direction perpendicular to the parking spot and is used to aid the geomagnetic vehicle sensor (34) to detect the vehicle in the parking spot,
wherein except for a duration where the parking spot is not reserved and a duration of determining whether the vehicle departs from the parking spot, the radar sensor (35) is in a sleep state.

13. The parking spot lock of claim 11, wherein the RFID reader (31) is configured to:
receive a parking spot lock activating message sent by the server;
identify the information of the vehicle according to the parking spot lock activating message, and match the information of the vehicle with information of the reservation vehicle stored by the parking spot lock to obtain a matching result; and
in response to determining that the matching result indicates consistency between the information of the vehicle and the information of the reservation vehicle, determine that the vehicle is the reservation vehicle.

14. The parking spot lock of claim 11, wherein the controller (32) is further configured to:
control a stopper arm of the parking spot lock to descend to enable the vehicle to enter the parking spot.

15. The parking spot lock of claim 11, wherein the controller (32) is further configured to:
receive a standby notification sent by the server, and
control, according to the standby notification, the RFID reader (31) and the radar sensor (35) to be in a standby state.

## Patentansprüche

1. Verfahren zur Parkverwaltung, das von einem Server durchgeführt wird, umfassend:
Empfangen einer ersten Parkreservierungsanforderungsnachricht, die von einem Endgerät gesendet wird, wobei die erste Parkreservierungsanforderungsnachricht einen Zielort eines Fahrzeugs umfasst;
Erhalten der folgenden Informationen, die vom Server gespeichert sind, gemäß der ersten Parkreservierungsanforderungsnachricht: die Anzahl der Parkplätze am Zielort, die Anzahl der Stellplätze in jedem Parkplatz, die Anzahl der freien Stellplätze in jedem Parkplatz;
Erhalten von Verkehrsinformationen jedes Parkplatzes aus einem externen intelligenten Transportsystem;
**gekennzeichnet durch** Bestimmen eines vorgeschlagenen Parkplatzes durch den Server auf der Grundlage der Anzahl der Parkplätze am Zielort, der Anzahl der Stellplätze in jedem der Parkplätze, der Anzahl der freien Stellplätze in jedem der Parkplätze und der Verkehrsinformationen jedes der Parkplätze;
(402) Senden von Parkinformationen an das Endgerät, damit das Endgerät anhand der Parkinformationen einen Parkplatz auswählen kann, wobei die Parkinformationen Folgendes umfassen: die Anzahl der Parkplätze am Zielort, die Anzahl der Stellplätze in jedem Parkplatz und die Verkehrsinformationen zu jedem Parkplatz und dem vorgeschlagenen Parkplatz;
Empfangen einer zweiten Parkreservierungsanforderungsnachricht, die vom Endgerät gesendet wird, wobei die zweite Parkreservierungsanforderungsnachricht den vom Endgerät ausgewählten Parkplatz umfasst;
Auswählen eines zu reservierenden Stellplatzes in dem vom Endgerät ausgewählten Parkplatz durch den Server;
Senden einer Parkreservierungserfolgsnachricht an das Endgerät, um das Endgerät über Informationen zu einem reservierten Parkplatz und einem reservierten Stellplatz zu benachrichtigen, wobei der reservierte Parkplatz dem vom Endgerät ausgewählten Parkplatz entspricht und der reservierte Stellplatz dem vom Server ausgewählten Stellplatz entspricht; und
Senden einer Stellplatzreservierungsbenachrichtigung durch den Server an eine Stellplatzsperre des reservierten Stellplatzes, um die Stellplatzsperre anzuweisen, in einen Reservierungsmodus einzutreten, der so konfiguriert ist, dass er verhindert, dass ein Fahrzeug mit keiner Reservierung in den reservierten Stellplatz hineinfährt;
Empfangen eines vom Endgerät gesendeten Befehls zum Entriegeln der Stellplatzsperre, wenn das Fahrzeug am reservierten Stellplatz in dem Parkplatz ankommt; und
Senden einer Stellplatzsperren-Aktivierungsnachricht an die Stellplatzsperre durch den Server gemäß dem Befehl zum Entriegeln der Stellplatzsperre, um die Stellplatzsperre anzuweisen, Informationen über das Fahrzeug zu identifizieren, um die Stellplatzsperre so zu steuern, dass sie den reservierten Stellplatz entriegelt.

2. Verfahren nach Anspruch 1, ferner umfassend:
nach dem Senden der Parkreservierungserfolgsnachricht, Aufzeichnen (404) der Parkreservierungs-Erfolgszeit;
nach dem Empfangen des vom Endgerät gesendeten Befehls zum Entriegeln der Stellplatzsperre, Aufzeichnen der Reservierungsstellplatz-Entriegelungszeit;
Empfangen einer von der Stellplatzsperre gesendeten Fahrzeugabfahrtsbenachrichtigung und (406) Aufzeichnen der Fahrzeugabfahrtszeit; und
(407) Berechnung einer Parkgebühr anhand der Parkreservierungs-Erfolgszeit, der Reservierungsstellplatz-Entriegelungszeit, der Fahrzeugabfahrtszeit und einer voreingestellten Gebührenregelung.

3. Verfahren nach Anspruch 2, wobei die Parkgebühr über eine Drittanbieterplattform bezahlt wird.

4. Verfahren zur Parkverwaltung nach Anspruch 1, das ferner die folgenden Schritte umfasst, die von der Stellplatzsperre durchgeführt werden:
(601) Empfangen der vom Server gesendeten Stellplatzreservierungsbenachrichtigung durch die Stellplatzsperre;
Steuern (601) eines Sperrarms der Stellplatzsperre durch die Stellplatzsperre, um gemäß der Stellplatzreservierungsbenachrichtigung in einen Reservierungsmodus einzutreten, wobei der Reservierungsmodus dazu dient, zu verhindern, dass ein Fahrzeug mit keiner Reservierung in einen der Stellplatzsperre entsprechenden Stellplatz hineinfährt;
(602) Identifizieren von Informationen eines Fahrzeugs durch die Stellplatzsperre und Feststellen durch die Stellplatzsperre, ob das Fahrzeug gemäß den Informationen des Fahrzeugs ein Fahrzeug mit Reservierung ist; und
als Reaktion auf die Feststellung, dass das Fahrzeug gemäß den Informationen des Fahrzeugs das Fahrzeug mit Reservierung ist, Steuern des Sperrarms der Stellplatzsperre durch die Stellplatzsperre, um ihn abzusenken, damit das Fahrzeug in einen Stellplatz hineinfahren kann, der der Stellplatzsperre entspricht.

5. Verfahren nach Anspruch 4, wobei (602) das Identifizieren der Informationen des Fahrzeugs durch die Stellplatzsperre und das Feststellen durch die Stellplatzsperre, ob das Fahrzeug gemäß den Informationen des Fahrzeugs das Fahrzeug mit Reservierung ist, Folgendes umfasst:
Empfangen einer von dem Server gesendeten Stellplatzsperren-Aktivierungsnachricht durch einen RFID (Radio Frequency Identification)-Leser in der Stellplatzsperre;
Identifizieren der Informationen des Fahrzeugs anhand der Stellplatzsperren-Aktivierungsnachricht durch den RFID-Leser (31);
Abgleichen der Informationen des Fahrzeugs mit den vom RFID-Leser gespeicherten Informationen des Fahrzeugs mit Reservierung durch den RFID-Leser, um ein Abgleichergebnis zu erhalten; und
als Reaktion auf die Feststellung, dass das Abgleichergebnis eine Übereinstimmung zwischen den Informationen des Fahrzeugs und den Informationen des Fahrzeugs mit Reservierung anzeigt, Feststellen durch den RFID-Leser, dass das Fahrzeug das Fahrzeug mit Reservierung ist.

6. Verfahren nach Anspruch 4, wobei das Verfahren nach dem Hineinfahren des Fahrzeugs in den Stellplatz ferner Folgendes umfasst:
Erfassen eines Magnetfelds des Stellplatzes durch einen geomagnetischen Fahrzeugdetektor der Stellplatzsperre und (604) Erhalten erster Parkinformationen des Fahrzeugs; und
Senden der ersten Parkinformationen durch die Stellplatzsperre an den Server;
wobei die ersten Parkinformationen einen ersten Parkzustand des Fahrzeugs anzeigen und der erste Parkzustand einen geparkten Zustand und einen unbestimmten Parkzustand umfasst.

7. Verfahren nach Anspruch 6, wobei das Verfahren als Reaktion auf die Feststellung, dass der erste Parkzustand der unbestimmte Parkzustand ist, ferner Folgendes umfasst:
Empfangen einer vom Server gesendeten Parkinformationserhaltungsbenachrichtigung durch einen Radarsensor der Stellplatzsperre,
Erfassen der Informationen des Fahrzeugs gemäß der Parkinformationserhaltungsbenachrichtigung durch den Radarsensor,
(605) Erhalten zweiter Parkinformationen des Fahrzeugs durch den Radarsensor; und
Senden der zweiten Parkinformationen durch die Stellplatzsperre an den Server;
wobei die zweiten Parkinformationen verwendet werden, um einen zweiten Parkzustand des Fahrzeugs anzuzeigen, und der zweite Parkzustand einen geparkten Zustand und einen unbestimmten Parkzustand umfasst.

8. Verfahren nach Anspruch 6, wobei das Verfahren ferner Folgendes umfasst:
Erfassen durch den geomagnetischen Fahrzeugdetektor, dass das Fahrzeug den Stellplatz verlässt;
Benachrichtigung des Servers durch den geomagnetischen Fahrzeugdetektor, um den RFID-Leser und den Radarsensor zu veranlassen, zu bestätigen, ob der Stellplatz belegt ist; und
als Reaktion auf die Bestätigung, dass der Stellplatz frei ist, Senden einer Fahrzeugabfahrtsbenachrichtigung durch die Stellplatzsperre an den Server, um den Server zu veranlassen, eine Parkgebühr zu berechnen.

9. Verfahren nach Anspruch 4, wobei das Verfahren ferner Folgendes umfasst:
als Reaktion auf die Erfassung, dass das Fahrzeug mit keiner Reservierung in den Stellplatz hineinfährt und der Sperrarm der Stellplatzsperre abgesenkt ist, Senden einer Stellplatzreservierungsfehlernachricht durch die Stellplatzsperre an den Server.

10. Verfahren nach Anspruch 4, wobei während des Anhebens des Sperrarms das Verfahren ferner Folgendes umfasst:
als Reaktion auf die Erfassung, dass sich das Fahrzeug mit keiner Reservierung der Stellplatzsperre nähert, Erfassen eines Abstands zwischen dem Radarsensor und dem Fahrzeug mit keiner Reservierung durch einen Radarsensor der Stellplatzsperre; und
als Reaktion auf die Feststellung, dass der Abstand zwischen dem Radarsensor und dem Fahrzeug mit keiner Reservierung kleiner oder gleich einem voreingestellten Abstandsschwellenwert ist, Aktivieren eines Alarmsystems des Stellplatzes durch den Radarsensor, um darauf hinzuweisen, dass der Stellplatz reserviert wurde.

11. System umfassend einen Server und eine Stellplatzsperre, wobei der Server so konfiguriert ist, dass er das Verfahren nach Anspruch 1 durchgeführt, und wobei die Stellplatzsperre Folgendes umfasst:
einen Empfänger (30), einen RFID (Radio Frequency Identification)-Leser (31), eine Steuereinheit (32), einen Stellplatzsperrkörper (33), einen geomagnetischen Fahrzeugsensor (34), einen Radarsensor (35) und ein Alarmsystem (36); wobei
der Empfänger (30) so konfiguriert ist, dass er eine vom Server gesendete Stellplatzreservierungsbenachrichtigung empfängt und den Stellplatzsperrekörper (33) so steuert, dass er gemäß der Stellplatzreservierungsbenachrichtigung in einen Reservierungsmodus eintritt;
der RFID-Leser (31) so konfiguriert ist, dass er Informationen des Fahrzeugs identifiziert und anhand der Informationen des Fahrzeugs feststellt, ob es sich um ein Fahrzeug mit Reservierung handelt;
die Steuereinheit (32) so konfiguriert ist, dass sie als Reaktion auf die Feststellung, dass es sich um das Fahrzeug mit Reservierung handelt, den Stellplatzsperrkörper (33) aktiviert, damit das Fahrzeug in einen Stellplatz hineinfahren kann, der der Stellplatzsperre entspricht;
der geomagnetische Fahrzeugsensor (34) konfiguriert ist, um: nachdem das Fahrzeug in den Stellplatz hineingefahren ist, ein Magnetfeld des Stellplatzes entsprechend der Stellplatzsperre zu erfassen, erste Parkinformationen des Fahrzeugs zu erhalten und die ersten Parkinformationen an den Server zu senden, wobei die ersten Parkinformationen einen ersten Parkzustand des Fahrzeugs anzeigen;
der Radarsensor (35) so konfiguriert ist, dass er eine vom Server gesendete Parkinformationserhaltungsbenachrichtigung empfängt, die Informationen des Fahrzeugs gemäß der Parkinformationserhaltungsbenachrichtigung erfasst, zweite Parkinformationen erhält und die zweiten Parkinformationen an den Server sendet,
das Alarmsystem (36) so konfiguriert ist, dass es darauf hinweist, dass der der Stellplatzsperre entsprechende Stellplatz reserviert wurde.

12. Stellplatzsperre nach Anspruch 11, wobei der Radarsensor (35) an einer mittleren Position an der Oberseite eines Sperrarms des Stellplatzsperrkörpers (33) montiert ist und der Radarsensor (35) wie folgt konfiguriert ist:
wenn der Sperrarm angehoben ist, hat der Radarsensor (35) eine zentrale Erfassungsrichtung parallel zum Boden und dient zur Alarmierung bei Annäherung eines Fahrzeugs mit keiner Reservierung; und
wenn der Sperrarm abgesenkt ist, hat der Radarsensor (35) eine zentrale Erfassungsrichtung senkrecht zum Stellplatz und wird verwendet, um den geomagnetischen Fahrzeugsensor (34) bei der Erfassung des Fahrzeugs in dem Stellplatz zu unterstützen,
wobei sich der Radarsensor (35) außer einer Zeitspanne, in der der Stellplatz nicht reserviert ist, und einer Zeitspanne, in der festgestellt wird, ob das Fahrzeug den Stellplatz verlässt, in einem Ruhezustand befindet.

13. Stellplatzsperre nach Anspruch 11, wobei der RFID-Leser (31) konfiguriert ist, um:
eine vom Server gesendete Stellplatzsperren-Aktivierungsnachricht zu empfangen;
die Informationen des Fahrzeugs gemäß der Stellplatzsperren-Aktivierungsnachricht zu identifizieren und die Informationen des Fahrzeugs mit den von der Stellplatzsperre gespeicherten Informationen des Fahrzeugs mit Reservierung abzugleichen, um ein Abgleichergebnis zu erhalten; und
als Reaktion auf die Feststellung, dass das Abgleichergebnis eine Übereinstimmung zwischen den Informationen des Fahrzeugs und den Informationen des Fahrzeugs mit Reservierung anzeigt, festzustellen, dass das Fahrzeug das Fahrzeug mit Reservierung ist.

14. Stellplatzsperre nach Anspruch 11, wobei die Steuereinheit (32) ferner konfiguriert ist, um:
einen Sperrarm der Stellplatzsperre so zu steuern, dass er sich absenkt, um dem Fahrzeug das Hineinfahren in den Stellplatz zu ermöglichen.

15. Stellplatzsperre nach Anspruch 11, wobei die Steuereinheit (32) ferner konfiguriert ist, um:
eine vom Server gesendete Standby-Benachrichtigung zu empfangen und
gemäß der Standby-Benachrichtigung den RFID-Leser (31) und den Radarsensor (35) so zu steuern, dass sie sich in einem Standby-Zustand befinden.

## Revendications

1. Procédé de gestion de stationnement, exécuté par un serveur, comprenant :
recevoir un premier message de requête de réservation de stationnement envoyé par un terminal, dans lequel le premier message de requête de réservation de stationnement comprend une destination d'un véhicule ;
acquérir, en fonction du premier message de requête de réservation de stationnement, les informations suivantes stockées par le serveur : le nombre de parkings de la destination, le nombre de places de stationnement dans chaque parking, le nombre de places de stationnement libres dans chaque parking ;
acquérir les informations de trafic de chaque parking depuis un système de transport intelligent externe ;
**caractérisé par** le fait de déterminer, via le serveur, une suggestion de parking en se basant sur le nombre de parkings de la destination, le nombre de places de stationnement dans chaque parking, le nombre de places de stationnement libres dans chaque parking, et les informations de trafic de chaque parking ;
(402) envoyer des informations de stationnement au terminal afin de permettre au terminal de sélectionner un parking en fonction des informations de stationnement, dans lequel les informations de stationnement comprennent : le nombre de parkings de la destination, le nombre de places de stationnement libres dans chaque parking, et les informations de trafic de chaque parking et la suggestion de parking ;
recevoir un deuxième message de requête de réservation de stationnement envoyé par un terminal, dans lequel le deuxième message de requête de réservation de stationnement comprend le parking sélectionné par le terminal ;
sélectionner, via le serveur, une place de stationnement à réserver dans le parking sélectionné par le terminal ;
envoyer un message de succès de réservation de stationnement au terminal pour notifier le terminal des informations concernant le parking réservé et la place de stationnement réservée, dans lequel la place de stationnement réservée correspond à la place de stationnement sélectionnée par le terminal, et la place de stationnement réservée correspond à la place de stationnement sélectionnée par le serveur ; et
envoyer, via le serveur,
une notification de réservation de place de stationnement à un verrou de place de stationnement de la place de stationnement réservée afin de commander au verrou de place de stationnement de passer en mode réservé, configurée pour empêcher un véhicule sans réservation de pénétrer la place de stationnement réservée ;
recevoir une commande de déverrouillage de verrou de place de stationnement envoyée par le terminal lorsque le véhicule arrive à la place de stationnement réservée sur le parking ; et
envoyer, via le serveur,
conformément à la commande de déverrouillage de verrou de place de stationnement, un message d'activation de verrou de place de stationnement au verrou de place de stationnement pour commander au verrou de place de stationnement d'identifier des informations du véhicule afin de commander au verrou de place de stationnement de déverrouiller la place de stationnement réservée.

2. Procédé selon la revendication 1, comprenant en outre :
après avoir envoyé le message de succès de réservation de stationnement, enregistrer (404) l'heure de de succès de réservation de stationnement ;
après avoir reçu la commande de déverrouillage de verrou de place de stationnement envoyée par le terminal, enregistrer l'heure de déverrouillage de place de stationnement ;
recevoir une notification de départ de véhicule envoyée par le verrou de place de stationnement et (406) enregistrer l'heure de départ du véhicule ; et
(407) calculer des frais de stationnement en fonction de l'heure de succès de réservation de stationnement, l'heure de déverrouillage de place de stationnement de réservation, l'heure de départ du véhicule et d'une politique de tarification prédéfinie.

3. Procédé selon la revendication 2, dans lequel les frais de stationnement sont payés via une plateforme tierce.

4. Procédé de gestion de parking selon la revendication 1, comprenant en outre les étapes suivantes effectuées par le verrou de place de stationnement :
(601) recevoir, via le verrou de place de stationnement, la notification de réservation de place de stationnement envoyée par le serveur ;
commander (601), via le verrou de place de stationnement, à un bras d'arrêt du verrou de place de stationnement de passer en mode réservé conformément à la notification de réservation de place de stationnement, dans lequel le mode réservé est utilisé pour empêcher un véhicule sans réservation de pénétrer une place de stationnement correspondant au verrou de place de stationnement ;
(602) identifier, via le verrou de place de stationnement, les informations d'un véhicule, et déterminer, via le verrou de place de stationnement, si le véhicule est un véhicule à réservation conformément aux informations du véhicule ; et
en réponse au fait de déterminer que le véhicule est le véhicule à réservation conformément aux informations du véhicule, commander, via le verrou de place de stationnement, au bras d'arrêt du verrou de place de stationnement de s'abaisser afin de permettre au véhicule de pénétrer la place de stationnement correspondant au verrou de place de stationnement.

5. Procédé selon la revendication 4, dans lequel (602) identifier, via le verrou de place de stationnement, les informations d'un véhicule, et déterminer, via le verrou de place de stationnement, si le véhicule est un véhicule à réservation conformément aux informations du véhicule comprend :
recevoir, via lecteur d'identification de fréquence radio, RFID, dans le verrou de place de stationnement, un message d'activation de verrou de place de stationnement envoyé par le serveur ;
identifier, via le lecteur RFID (31), les informations du véhicule conformément au message d'activation de verrou de place de stationnement ;
faire correspondre, via le lecteur RFID, les informations du véhicule aux informations du véhicule de réservation stockées par le lecteur RFID afin d'obtenir un résultat de correspondance ; et
en réponse au fait de déterminer que le résultat de correspondance indique une cohérence entre les informations du véhicule et les informations du véhicule de réservation, déterminer, via le lecteur RFID, que le véhicule est le véhicule de réservation.

6. Procédé selon la revendication 4, dans lequel après que le véhicule a pénétré la place de stationnement, le procédé comprend en outre :
détecter, via un détecteur géomagnétique de véhicule du verrou de place de stationnement, le champ magnétique de la place de stationnement, et (604) acquérir les premières informations de stationnement du véhicule ; et
envoyer, via le verrou de place de stationnement, les premières informations de stationnement au serveur ;
dans lequel les premières informations de stationnement indiquent un premier état de stationnement du véhicule, et le premier état de stationnement comprend un état de stationnement et un état de stationnement incertain.

7. Procédé selon la revendication 6, dans lequel en réponse au fait de déterminer que le premier état de stationnement est l'état de stationnement incertain, le procédé comprend en outre :
recevoir, via un capteur radar du verrou de place de stationnement, une notification d'acquisition d'informations de stationnement envoyée par le serveur,
détecter, via le capteur radar, les informations du véhicule conformément à la notification d'acquisition d'informations de stationnement,
(605) acquérir, via le capteur radar, des deuxièmes informations de stationnement du véhicule ; et envoyer, via le verrou de place de stationnement, les deuxièmes informations de stationnement au serveur ;
dans lequel les deuxièmes informations de stationnement sont utilisées pour indiquer un deuxième état de stationnement du véhicule, et les deuxièmes informations de stationnement comprennent un état de stationnement et un état de stationnement incertain.

8. Procédé selon la revendication 6, dans lequel le procédé comprend en outre :
détecter, via le détecteur géomagnétique de véhicule, le véhicule quitte la place de stationnement ;
notifier, via le détecteur géomagnétique de véhicule, le serveur afin qu'il déclenche le lecteur RFID et le capteur radar afin de confirmer si la place de stationnement est occupée ; et
en réponse à la confirmation que la place de stationnement est vide, envoyer, via le verrou de place de stationnement, une notification de départ de véhicule au serveur afin de déclencher le calcul des frais de stationnement par le serveur.

9. Procédé selon la revendication 4, dans lequel le procédé comprend en outre :
en réponse au fait de détecter que le véhicule sans réservation pénètre la place de stationnement et que le bras d'arrêt du verrou de place de stationnement s'abaisse, envoyer, via le verrou de place de stationnement, un message d'échec de réservation de place de stationnement au serveur.

10. Procédé selon la revendication 4, dans lequel durant la levée du bras d'arrêt, le procédé comprend en outre :
en réponse au fait de détecter que le véhicule sans réservation s'approche du verrou de la place de stationnement, détecter, via le capteur radar du verrou de la place de stationnement, la distance entre le capteur radar et le véhicule sans réservation ; et
en réponse au fait de déterminer que la distance entre le capteur radar et le véhicule sans réservation est inférieure ou égale à un seuil de distance prédéfini, activer, via le capteur radar, un système d'alerte de la place de stationnement pour afficher que la place de stationnement a été réservée.

11. Système comprenant un serveur et un verrou de place de stationnement, dans lequel le serveur est configuré pour mettre en œuvre le procédé de la revendication 1 et dans lequel le verrou de place de stationnement comprend :
un récepteur (30), un lecteur d'identification de fréquence radio (31), RFID,
un contrôleur (32), un corps de verrou de place de stationnement (33), un capteur géomagnétique de véhicule (34), un capteur radar (35), et un système d'alerte (36) ; dans lequel
le récepteur (30) est configuré pour recevoir une notification de réservation de place de stationnement envoyée par un serveur, et commander au corps de verrou de place de stationnement (33) de passer en mode réservé conformément à la notification de réservation de place de stationnement ;
le lecteur RFID (31) est configuré pour identifier les informations du véhicule, et déterminer si le véhicule est un véhicule à réservation conformément aux informations du véhicule ;
le contrôleur (32) est configuré pour, en réponse au fait de déterminer que le véhicule est le véhicule à réservation, activer le corps de verrou de place de stationnement (33) afin de permettre au véhicule de pénétrer la place de stationnement correspondant au verrou de place de stationnement ;
le capteur géomagnétique de véhicule (34) est configuré pour : une fois que le véhicule a pénétré la place de stationnement, détecter le champ magnétique de la place de stationnement correspondant au verrou de place de stationnement, acquérir les premières informations de stationnement du véhicule, et envoyer les premières informations de stationnement au serveur, dans lequel les premières informations de stationnement indiquent un premier état de stationnement du véhicule ;
le capteur radar (35) est configuré pour recevoir une notification d'acquisition d'informations de stationnement envoyée par le serveur, détecter les informations du véhicule conformément à la notification d'acquisition d'informations de stationnement, acquérir des deuxièmes informations de stationnement, et envoyer les deuxièmes informations de stationnement au serveur,
le système d'alerte (36) est configuré pour afficher que la place de stationnement correspondant au verrou de place de stationnement a été réservée.

12. Verrou de place de stationnement selon la revendication 11, dans lequel le capteur radar (35) est installé à une position médiane sur le dessus du bras d'arrêt du corps de verrou de place de stationnement (33), et le capteur radar (35) est configuré tel que suit :
dans le cas où le bras d'arrêt s'est levé, le capteur radar (35) dispose d'un sens de détection central parallèle au sol et est utilisé pour l'alerte d'approche de véhicule sans réservation ; et
dans le cas où le bras d'arrêt s'est abaissé, le capteur radar (35) dispose d'un sens de détection central perpendiculaire à la place de stationnement et est utilisé pour aider le capteur géomagnétique de véhicule (34) à détecter le véhicule sur la place de stationnement,
dans lequel excepté pour la durée pendant laquelle la place de stationnement n'est pas réservée et la durée pendant laquelle il est déterminé si le véhicule quitte la place de stationnement, le capteur radar (35) est en mode veille.

13. Verrou de place de stationnement selon la revendication 11, dans lequel le lecteur RFID (31) est configuré pour :
recevoir un message d'activation de verrou de place de stationnement envoyé par le serveur ;
identifier les informations du véhicule conformément au message d'activation de verrou de place de stationnement, et faire correspondre les informations du véhicule aux informations du véhicule de réservation stockées par le verrou de place de stationnement afin d'obtenir un résultat de correspondance ; et
en réponse au fait de déterminer que le résultat de correspondance indique une cohérence entre les informations du véhicule et les informations du véhicule de réservation, déterminer que le véhicule est le véhicule de réservation.

14. Verrou de place de stationnement selon la revendication 11, dans lequel le contrôleur (32) est en outre configuré pour :
commander au bras d'arrêt du verrou de place de stationnement de s'abaisser afin de permettre au véhicule de pénétrer la place de stationnement.

15. Verrou de place de stationnement selon la revendication 11, dans lequel le contrôleur (32) est en outre configuré pour :
recevoir une notification de mise en veille envoyée par le serveur, et commander, conformément à la notification de mise en veille, au lecteur RFID (31) et au capteur radar (35) d'être en état. de veille.
